# EUROPEAN PATENT APPLICATION

(11) **EP 4 324 547 A1**
(43) Date of publication of application: **21.02.2024**
(21) Application number: 23179773.9
(22) Date of filing: 16.06.2023
(51) Int. Cl.: B01D 53/22

(54) **GAS SEPARATION APPARATUS**

(30) Priority: 03.08.2022 JP 2022123903
(71) Applicant: Hitachi, Ltd., Tokyo 100-8280 (JP)
(72) Inventor: ISHIDA, Naoyuki, Chiyoda-ku,, 100-8280 (JP); MIZUKAMI, Takaaki, Chiyoda-ku,, 100-8280 (JP); FUJITA, Shinji, Chiyoda-ku,, 100-8280 (JP); KANI, Yuko, Chiyoda-ku,, 100-8280 (JP); WATANABE, Ayumi, Chiyoda-ku,, 100-8280 (JP); IIZUKA, Hidehiro, Chiyoda-ku,, 100-8280 (JP); YASHIKI, Tatsurou, Chiyoda-ku,, 100-8280 (JP); SASAKI, Takashi, Chiyoda-ku,, 100-8280 (JP); INAGAKI, Ryohei, Chiyoda-ku,, 100-8280 (JP)
(74) Representative: Strehl Schübel-Hopf & Partner

(57) **Abstract**

A gas separation apparatus includes: a gas separation membrane module including a gas separation membrane that selectively allows a specific gas to permeate the membrane, the gas separation membrane module being separated into a primary side and a secondary side by the gas separation membrane, the gas separation membrane module including a mixed gas pipe that supplies a mixed gas containing a specific gas to the primary side, a non-permeation gas pipe connected to the primary side, and a permeation gas pipe connected to the secondary side; and a branch pipe connecting the mixed gas pipe and the secondary side or a non-permeation gas return pipe connecting the non-permeation gas pipe and the secondary side.

## Description

### BACKGROUND OF THE INVENTION

### 1. Field of the Invention

The present disclosure relates to a gas separation apparatus.

### 2. Description of the Related Art

As a method for separating a specific gas from a mixed gas containing a plurality of types of gases, there is a method using a separation membrane that selectively allows gases to permeate therethrough. Examples of the separation membrane include a molecular sieve membrane represented by a ceramic membrane that separates gases using a difference in molecular diameter, and a polymer membrane that utilizes a difference in gas solubility in the membrane. In these separation membranes, a certain amount of other gas permeates than the specific gas to be permeated. The side before permeation through the separation membrane is referred to as "primary side", and the side after permeation is referred to as "secondary side". The gas permeation amount of the separation membrane is proportional to the difference between the gas partial pressure on the primary side and the gas partial pressure on the secondary side. When the gas partial pressure on the secondary side of the gas to be separated increases, the difference from the gas partial pressure on the primary side decreases, and the permeation amount decreases.

JP 2006-75728 A discloses a method of dehumidifying moisture contained in pressurized air with a polyimide-based hollow fiber separation membrane type dehumidifier and supplying the dehumidified air to a dry air supply system, in which air to be dehumidified is supplied to a primary side of a separation membrane, and a part of the obtained dry air is supplied as purge air to a secondary side of the membrane. In JP 2006-75728 A, the oxygen concentration in the dry air is controlled so as not to be equal to or less than a certain concentration by supplying part of the dry air to the secondary side.

### SUMMARY OF THE INVENTION

For example, a case is considered where hydrogen is mixed into a pipeline (gas grid) of natural gas (main component: methane), city gas, or the like and transported. In this case, the supply source of hydrogen uses, for example, electric power obtained from renewable energy such as sunlight and wind power. Since the output of renewable energy is not stable, the amount of hydrogen to be supplied varies depending on time of day. Thus, when a hydrogen separation membrane is used for separating hydrogen from a mixed gas of natural gas and hydrogen, the concentration of hydrogen contained in the mixed gas supplied to the hydrogen separation membrane varies. In addition, when the natural gas contained in the mixed gas is separated and used on the upstream side, the concentration of hydrogen contained in the mixed gas supplied to the downstream side varies depending on the amount of natural gas or hydrogen to be consumed.

In the dry air supplying method described in JP 2006-75728 A, the gas to be used is dry air, and moisture obtained through dehumidification is discharged outside without being used. When this configuration is applied to a gas separation apparatus, it should be noted that when the concentration of a specific gas on the primary side changes, the amount of components contained in the mixed gas that permeates the separation membrane changes, and thus the concentration of the specific gas in a non-permeation gas changes.

When hydrogen is used as the specific gas and the hydrogen concentration on the secondary side is diluted and adjusted with the non-permeation gas, the hydrogen concentration of the non-permeation gas changes depending on the flow rate on the primary side and the hydrogen concentration, and thus, it is necessary to monitor the hydrogen concentration in the dilution gas and adjust the flow rate. When the dilution gas having a changed hydrogen concentration is supplied to the secondary side, the partial pressure of hydrogen on the secondary side changes, and the permeation amount of each component in the mixed gas changes, and thus, the hydrogen concentration of the non-permeation gas changes. In response to the change in the hydrogen concentration of the non-permeation gas, the flow rate of the dilution gas is adjusted again. When the secondary-side hydrogen concentration is adjusted using the non-permeation gas as a purge gas, the above-described feedback is required, and thus it takes time to stabilize the hydrogen concentration of the dilution gas.

In addition, the amount of hydrogen that can be supplied to the secondary side is hydrogen that has permeated through the separation membrane and hydrogen contained in the dilution gas. The dilution gas that is the non-permeation gas that has passed through the separation membrane has the lowest hydrogen concentration in the system, and the amount of hydrogen contained in the dilution gas that can be supplied to the secondary side is reduced.

An object of the present disclosure is to increase the flow rate of the specific gas to be supplied to the secondary side in a gas separation apparatus.

A gas separation apparatus of the present disclosure includes: a gas separation membrane module including a gas separation membrane that selectively allows a specific gas to permeate the membrane, the gas separation membrane module being separated into a primary side and a secondary side by the gas separation membrane, the gas separation membrane module including a mixed gas pipe that supplies a mixed gas containing a specific gas to the primary side, a non-permeation gas pipe connected to the primary side, and a permeation gas pipe connected to the secondary side; and a branch pipe connecting the mixed gas pipe and the secondary side or a non-permeation gas return pipe connecting the non-permeation gas pipe and the secondary side.

According to the present disclosure, in the gas separation apparatus, the flow rate of the specific gas to be supplied to the secondary side can be increased.

### BRIEF DESCRIPTION OF THE DRAWINGS

Fig. 1 is a schematic configuration diagram illustrating an example of a gas separation apparatus of a first embodiment;
Fig. 2 is a schematic configuration diagram illustrating a gas separation apparatus of a comparative example;
Fig. 3 is a schematic configuration diagram illustrating a gas separation apparatus of a modification;
Fig. 4 is a graph showing an example in which the supply amount of hydrogen to a secondary side 14 is calculated in the configuration of Figs. 1 to 3;
Fig. 5 is a graph showing a result of evaluating performance when the hydrogen concentration of a mixed gas to be separated is changed;
Fig. 6 is a schematic configuration diagram illustrating an example of a gas separation apparatus of a second embodiment;
Fig. 7 is a schematic configuration diagram illustrating a gas separation apparatus of a modification according to the second embodiment;
Fig. 8 is a schematic configuration diagram illustrating a gas separation apparatus of a third embodiment;
Fig. 9 is a schematic configuration diagram illustrating a gas separation apparatus of a fourth embodiment; and
Fig. 10 is a schematic configuration diagram illustrating a gas separation apparatus of a fifth embodiment.

### DESCRIPTION OF THE PREFERRED EMBODIMENTS

An embodiment of the present invention relates to a gas separation apparatus with which, when a specific gas different from natural gas is supplied by using an existing pipeline for gas such as natural gas, a user supplies the specific gas having a desired concentration from a gas pipeline to the user at a place of use. Examples of the specific gas include hydrogen gas.

Hereinafter, a gas separation apparatus according to an embodiment of the present disclosure will be described with reference to the drawings. In the following description, a case where the mixed gas is methane, which is a main component of natural gas, and the specific gas to be mixed with the methane is hydrogen will be described. However, the gas separation apparatus of the present disclosure is not limited to such a composition of the mixed gas, and is desirably applied to all cases where both the specific gas and remaining gas (in the following embodiments, it is referred to as "non-permeation gas") remaining on the mixed gas side as a result of separating the specific gas are effectively used without being released (discharged) or discarded to the outside of the apparatus. It is desirable that at least the specific gas is effectively used. Here, effective use may be paraphrased by the term "useful".

Examples of the mixed gas also include exhaust gas generated in a power plant, a factory, or the like. The exhaust gas includes nitrogen, oxygen, and the like in addition to carbon dioxide generated by combustion or the like. In this case, at least carbon dioxide is effectively used as the specific gas. Carbon dioxide is useful as a carbon source in organic synthesis.

### [First embodiment]

In the present embodiment, a case where hydrogen in a mixed gas of hydrogen and methane is separated to the secondary side by a hydrogen separation membrane will be described.

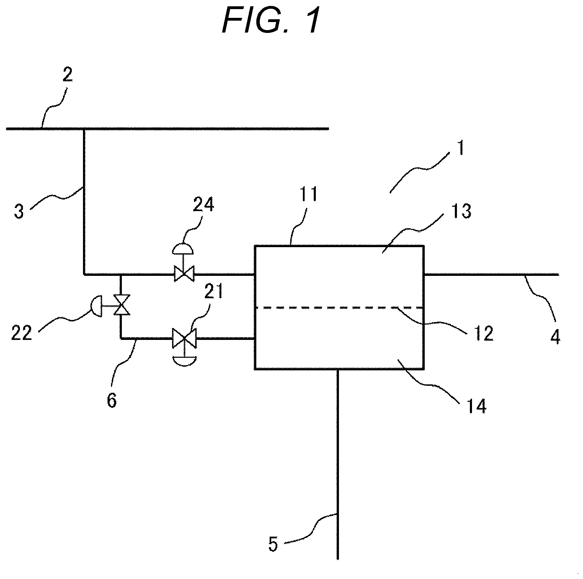

Fig. 1 is a schematic configuration diagram illustrating an example of a gas separation apparatus of the present embodiment.

In this drawing, a hydrogen separation apparatus 1 (gas separation apparatus) receives supply of a mixed gas of hydrogen and methane through a mixed gas pipe 3 branched from a mixed gas main pipe 2. The hydrogen separation apparatus 1 includes a hydrogen separation membrane module 11 (gas separation membrane module). The hydrogen separation membrane module 11 is separated into a primary side 13 and a secondary side 14 by a hydrogen separation membrane 12 (gas separation membrane). The hydrogen separation membrane 12 is a polyimide membrane of a polymer membrane. As the hydrogen separation membrane 12, a ceramic membrane or a carbon membrane may be used.

The mixed gas pipe 3 is connected to the primary side 13. A non-permeation gas pipe 4 is connected to the primary side 13. A permeation gas pipe 5 is connected to the secondary side 14. The mixed gas pipe 3 is provided with a branch pipe 6 (dilution gas pipe) and connected to the secondary side 14.

The mixed gas pipe 3 is provided with a mixed gas flow rate adjusting valve 24. The branch pipe 6 is provided with a dilution gas flow rate adjusting valve 21 and a pressure reducing valve 22. The pressure reducing valve 22 may be omitted by causing the dilution gas flow rate adjusting valve 21 to have a pressure reducing function.

Of the mixed gas supplied from the mixed gas main pipe 2 to the primary side 13 of the hydrogen separation apparatus 1, hydrogen mainly permeates through the hydrogen separation membrane 12. Methane also permeates through hydrogen separation membrane 12, but hydrogen is more likely to permeate the membrane than methane. Thus, the secondary side 14 has a higher hydrogen concentration than the primary side 13. The permeation amount of each gas is proportional to the partial pressure difference of each gas between the primary side 13 and the secondary side 14.

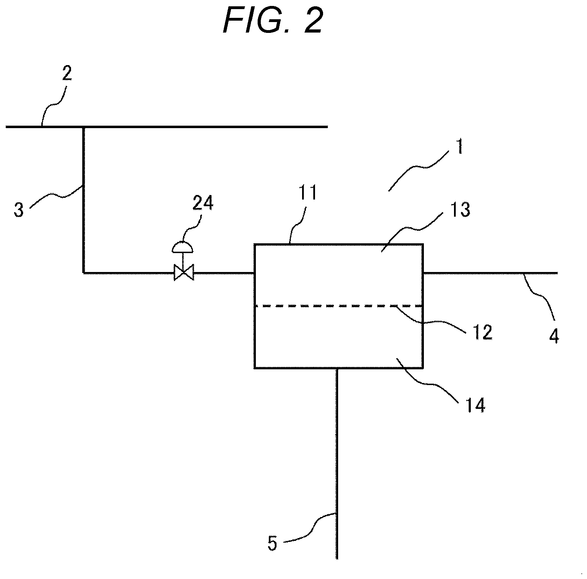

Fig. 2 is a schematic configuration diagram illustrating a gas separation apparatus of a comparative example.

In the drawing, the branch pipe 6 illustrated in Fig. 1 is not provided. That is, this comparative example is a case where hydrogen on the secondary side 14 where the hydrogen concentration is high is not diluted. In this case, when no dilution gas is used, the hydrogen concentration on the secondary side 14 is high, and thus the partial pressure difference decreases, and the permeation amount of hydrogen in the hydrogen separation membrane 12 decreases.

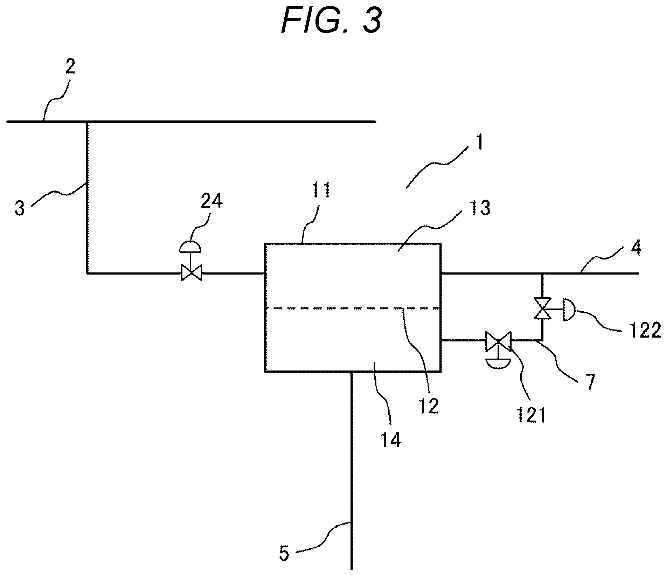

Fig. 3 is a schematic configuration diagram illustrating a gas separation apparatus of a modification.

In this drawing, the branch pipe 6 illustrated in Fig. 1 is not provided, but a non-permeation gas return pipe 7 is provided to the non-permeation gas pipe 4 and connected to the secondary side 14. The non-permeation gas return pipe 7 is provided with a dilution gas flow rate adjusting valve 121 and a pressure reducing valve 122. The pressure reducing valve 122 may be omitted by causing the dilution gas flow rate adjusting valve 121 to have a pressure reducing function. In the present modification, part of the non-permeation gas is supplied to the secondary side 14 as the dilution gas in this manner. Since the non-permeation gas has a low hydrogen concentration, hydrogen on the secondary side 14 is diluted, and the partial pressure difference of hydrogen increases. Thus, the amount of hydrogen permeating through the hydrogen separation membrane 12 increases. The amount of hydrogen to be supplied to the secondary side 14 is the sum of hydrogen that has permeated through the hydrogen separation membrane 12 and hydrogen contained in the dilution gas.

In the configuration illustrated in Fig. 1, the mixed gas is supplied from the mixed gas pipe 3 to the primary side 13 of the hydrogen separation membrane 12, and the mixed gas is also supplied as the dilution gas to the secondary side 14 of the hydrogen separation membrane 12 through the branch pipe 6. Since the hydrogen concentration of the mixed gas is lower than the hydrogen concentration on the secondary side 14, hydrogen on the secondary side 14 is diluted, and the partial pressure difference of hydrogen increases. Thus, the amount of hydrogen permeating through the hydrogen separation membrane 12 increases. The amount of hydrogen to be supplied to the secondary side 14 is the sum of hydrogen that has permeated through the hydrogen separation membrane 12 and hydrogen contained in the dilution gas.

In the gas separation apparatus illustrated in this drawing, since the hydrogen concentration of the dilution gas is higher than that in the configuration illustrated in Fig. 3, it can be expected that the amount of hydrogen that can be supplied increases depending on the flow rate of the dilution gas.

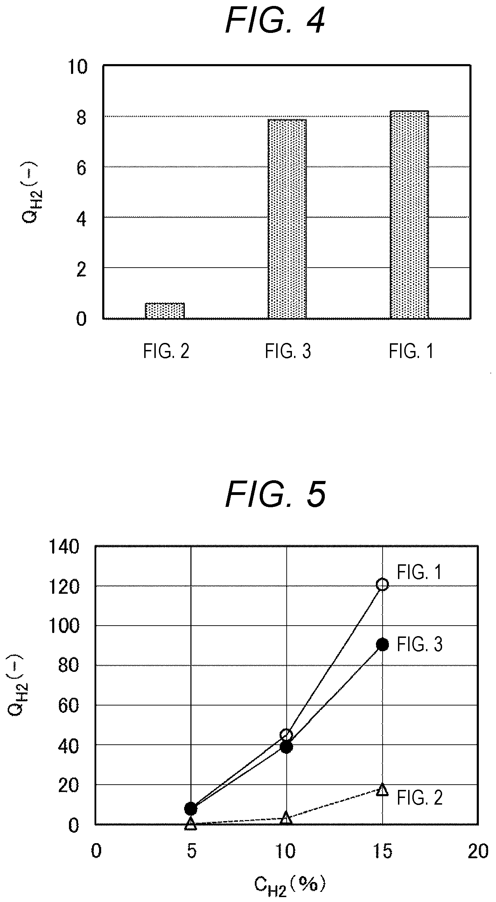

Fig. 4 is a graph showing an example in which the supply amount of hydrogen to the secondary side 14 is calculated in the configuration of Figs. 1 to 3. The horizontal axis corresponds to the figure numbers of Figs. 1 to 3, and vertical axis corresponds to the secondary-side hydrogen flow rate Q_{H2}(-) with respect to a mixed gas 1000.

As the calculation conditions, the pressure on the primary side is 1.7 MPaG, the pressure on the secondary side is 0.2 MPaG, the hydrogen concentration of the mixed gas to be supplied is 5%, the hydrogen permeation rate/methane permeation rate of the polyimide membrane is about 300, and the hydrogen concentration on the secondary side is adjusted to 20%.

As illustrated in this drawing, Q_{H2} increases in the order of the comparative example (Fig. 2), the modification (Fig. 3), and the present embodiment (Fig. 1).

Specifically, in the comparative example of Fig. 2, the hydrogen concentration is 29%, and the hydrogen permeation amount is 0.6 with the mixed gas flow rate of 1000 set by the mixed gas flow rate adjusting valve 24 and the flow rate in the secondary side 14 of 2. The partial pressure of hydrogen on the primary side 13 is 0.09 MPaA, the partial pressure of hydrogen on the secondary side 14 is 0.087 MPaA, and the partial pressure difference is 0.003 MPa. The gas on the secondary side 14 that has permeated outside the hydrogen separation membrane module 11 and the non-permeate gas on the primary side 13 are mixed to adjust the hydrogen concentration to 20%.

In Fig. 2 as an example, when the flow rate of the non-permeation gas is 1.3 in the non-permeation gas pipe 4, the hydrogen concentration can be adjusted to 20% by mixing the permeation gas into this non-permeation gas. In this case, the sum of the adjusted hydrogen amounts is 0.64.

In the modification of Fig. 3, the hydrogen concentration can be adjusted to 20% by supplying the dilution gas to the secondary side 14 at a flow rate of 31.5. In this case, the partial pressure of hydrogen on the secondary side 14 is 0.06 MPaA, and the partial pressure difference is 0.03 MPa. This partial pressure difference is 10 times the partial pressure difference in the comparative example. The flow rate on the secondary side is 39.6, and the hydrogen concentration is 20%.

In this modification, the amount of hydrogen that has permeated through the hydrogen separation membrane 12 is 6.5, hydrogen contained in the dilution gas is 1.4, and the total hydrogen flow rate on the secondary side 14 is 7.9. Thus, in this modification, it is possible to obtain a hydrogen amount about 12 times the hydrogen amount in the comparative example.

In the configuration of the present embodiment illustrated in Fig. 1, the hydrogen concentration can be adjusted to 20% by supplying the mixed gas on the upstream side of the hydrogen separation membrane module 11 as the dilution gas to the secondary side 14 at a flow rate of 33. In this case, the partial pressure of hydrogen on the secondary side 14 is 0.06 MPaA, and the partial pressure difference is 0.03 MPa, which is the same as the partial pressure difference in the modification of Fig. 3. The flow rate on the secondary side is 41, and the hydrogen concentration is 20%. The amount of hydrogen that has permeated through the hydrogen separation membrane 12 is 6.5, hydrogen contained in the dilution gas is 1.7, and the total hydrogen flow rate on the secondary side 14 is 8.2.

Thus, in the case of the present embodiment of Fig. 1, it is possible to obtain a hydrogen flow rate about 13 times the hydrogen flow rate in the comparative example of Fig. 2. The hydrogen flow rate is increased by about 4% as compared with the modification of Fig. 3.

Since the hydrogen concentration on the secondary side 14 is 20%, the partial pressure difference is the same as that in Fig. 3, and the amount of hydrogen permeating through the hydrogen separation membrane 12 is the same, but because the hydrogen concentration of the dilution gas is high, and the flow rate of the dilution gas is also high, the hydrogen flow rate on the secondary side 14 is increased by the difference in the amount of hydrogen in the dilution gas. When the flow rate of hydrogen to the secondary side 14 is the same, the configuration of the present embodiment can reduce the amount of the hydrogen separation membrane 12 by 4% as compared with the modification of Fig. 3. Thus, the apparatus can be made compact, and the cost related to the hydrogen separation membrane 12 can be reduced.

Fig. 5 is a graph showing a result of evaluating performance when the hydrogen concentration of the mixed gas to be separated is changed. The horizontal axis represents the hydrogen concentration C_{H2} of the mixed gas, and the vertical axis represents the secondary-side hydrogen flow rate Q_{H2} with respect to the mixed gas 1000. The present embodiment (Fig. 1) is indicated by o (open circles) and solid lines, the comparative example (Fig. 2) is indicated by △ (triangles) and dotted lines, and the modification (Fig. 3) is indicated by ● (closed circles) and solid lines.

As the hydrogen concentration C_{H2} of the mixed gas increases, the hydrogen concentration on the secondary side 14 increases. To keep the hydrogen concentration on the secondary side 14 constant at 20%, the dilution gas flow rate increases, and the secondary-side hydrogen flow rate Q_{H2} increases. In the configuration of the comparative example (Fig. 2) in which the permeation gas is not diluted, even when the hydrogen concentration increases, the secondary-side hydrogen concentration also increases, and the increase in the hydrogen partial pressure difference is reduced, and thus, the secondary-side hydrogen flow rate Q_{H2} does not increase significantly. On the other hand, when the permeation gas is diluted, the hydrogen partial pressure difference increases, and the hydrogen permeation amount increases.

When the mixed gas is used as the dilution gas as in the present embodiment (Fig. 1), the flow rate of the dilution gas necessary for diluting the permeation gas until the permeation gas has a hydrogen concentration of 20% needs to be larger than that when the non-permeation gas is used as the dilution gas as in the modification (Fig. 3) because of the high hydrogen concentration. In the case of the present embodiment (Fig. 1), since the flow rate is high and the hydrogen concentration is also high as compared with the modification (Fig. 3), the amount of hydrogen contained in the dilution gas is large, and the difference becomes significant as the hydrogen concentration C_{H2} increases. In this respect, the present embodiment (Fig. 1) is more effective than the modification (Fig. 3).

In this manner, according to the present embodiment, the partial pressure difference of the specific gas between the primary side and the secondary side can be increased, and the flow rate of the specific gas to be supplied to the secondary side can be increased. Utilizing this increasing effect for downsizing the gas separation membrane can reduce the cost of the gas separation apparatus.

### [Second embodiment]

In the present embodiment, a case where control is performed using a hydrogen concentration meter will be described.

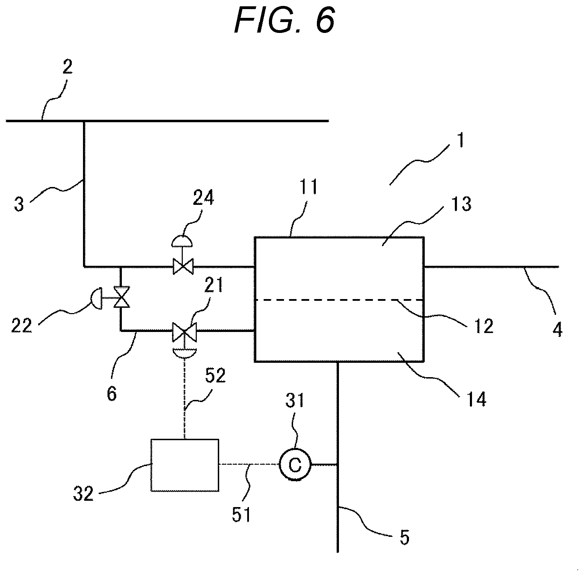

Fig. 6 is a schematic configuration diagram illustrating an example of a gas separation apparatus of the present embodiment.

This drawing will be described with respect to the difference from Fig. 1.

In Fig. 6, a hydrogen concentration meter 31 (hydrogen concentration detection unit (also referred to as "specific gas concentration detection unit")) and a control device 32 (control unit) are added to the configuration of Fig. 1.

The hydrogen concentration meter 31 measures the hydrogen concentration on the secondary side 14. The control device 32 adjusts the opening degree of the dilution gas flow rate adjusting valve 21 using the data of the hydrogen concentration meter 31. The hydrogen concentration meter 31 and the control device 32 are connected by a secondary-side hydrogen concentration signal cable 51. The dilution gas flow rate adjusting valve 21 and the control device 32 are connected to each other by a dilution gas flow rate adjusting valve control signal cable 52. Signals such as predetermined data are transmitted and received through the secondary-side hydrogen concentration signal cable 51 and the dilution gas flow rate adjusting valve control signal cable 52. Data and the like may be transmitted and received with wire via these cables as illustrated in the drawing, or they may be transmitted and received wirelessly without using these cables.

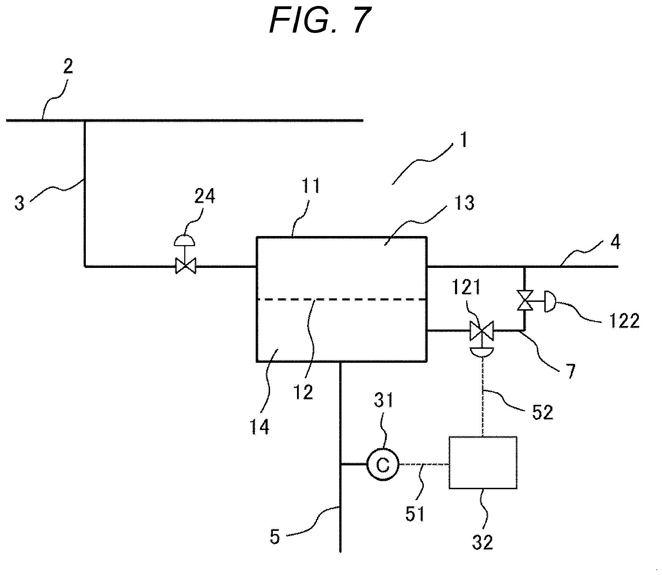

Fig. 7 is a schematic configuration diagram illustrating a gas separation apparatus of a modification.

This drawing will be described with respect to the difference from Fig. 3.

In Fig. 7, the hydrogen concentration meter 31 and the control device 32 are added to the configuration of Fig. 3. The control device 32 adjusts the opening degree of the dilution gas flow rate adjusting valve 121 using the data of the hydrogen concentration meter 31.

Using the mixed gas as the dilution gas as illustrated in Fig. 6 makes it easy to control the secondary-side hydrogen concentration when the concentration of the mixed gas changes as compared with the configuration of Fig. 7.

As an example, how the control is different between the case of Fig. 6 and the case of Fig. 7 when the hydrogen concentration of the mixed gas changes from 5% to 10% will be described with the above-described calculation conditions.

When the hydrogen concentration of the mixed gas changes from 5% to 10%, the secondary-side hydrogen concentration is about 57% in the case of no dilution. At this time, the hydrogen concentration of the non-permeation gas changes from 4.95% to 9.84%.

In the configuration of Fig. 7, when the flow rate of the dilution gas is finally set to 166, the secondary-side hydrogen concentration becomes 20%, which is the target value, but the hydrogen concentration of the non-permeation gas at this time is 7.58%, and the hydrogen concentration of the dilution gas changes while the secondary-side hydrogen concentration is adjusted. It is necessary to adjust the dilution gas flow rate according to the change in the hydrogen concentration. When the flow rate of the dilution gas is changed, the hydrogen concentration of the non-permeation gas is changed. The opening degree of the dilution gas flow rate adjusting valve 21 is adjusted by the control device 32 using the signal of the hydrogen concentration meter 31. However, when the non-permeation gas is used as the dilution gas, feedback is applied to the hydrogen concentration of the dilution gas by the flow rate, and it takes time to stabilize the secondary-side hydrogen concentration.

On the other hand, in the configuration of the present embodiment illustrated in Fig. 6, since the mixed gas is used as the dilution gas, the hydrogen concentration of the dilution gas is always the hydrogen concentration of the mixed gas. When the dilution gas is supplied with the flow rate value of the dilution gas finally set to 208, the secondary-side hydrogen concentration becomes 20%, which is the target value. To adjust the secondary-side hydrogen concentration, it is sufficient to control the flow rate of the dilution gas while monitoring the hydrogen concentration on the secondary side with the hydrogen concentration meter 31, and it is not necessary to consider the hydrogen concentration of the non-permeation gas, which can simplify the control algorithm as compared with the modification of Fig. 7.

### [Third embodiment]

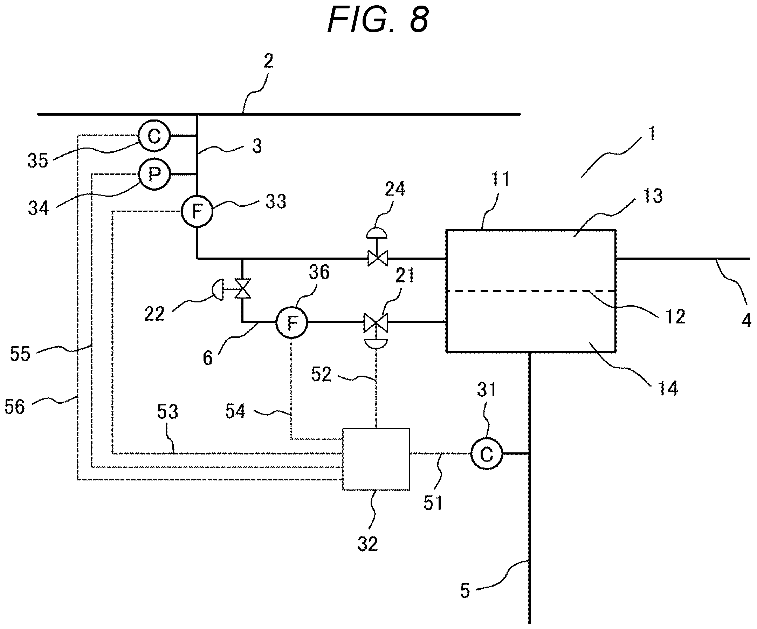

Fig. 8 is a schematic configuration diagram illustrating a gas separation apparatus of a third embodiment.

In this drawing, the difference from Fig. 6 of the second embodiment will be described.

In Fig. 8, the mixed gas pipe 3 is provided with a primary-side flowmeter 33 (primary-side flow rate detection unit), a primary-side pressure gauge 34 (primary-side pressure detection unit), and a primary-side hydrogen concentration gauge 35 (primary-side hydrogen concentration detection unit (also referred to as "primary-side specific gas concentration detection unit")). These three detection units are components of a "primary-side detection unit". In addition, the branch pipe 6 is provided with a dilution gas flowmeter 36 (dilution gas flow rate detection unit). Each measurement data of these detection units is transmitted to the control device 32 via a primary-side flowmeter signal cable 53, a primary-side pressure gauge signal cable 55, and a primary-side hydrogen concentration signal cable 56. The control device 32 adjusts the dilution gas flow rate using the measurement data of these units. The separation performance of the hydrogen separation membrane 12 is desirably stored in a calculation unit or a storage unit of the control device 32 in advance in the form of a numerical table, a correlation equation, or the like so that a predetermined value for the parameter input to the control device 32 can be calculated.

For example, as in the calculation example of the first embodiment, when the pressure on the primary side is 1.7 MPaG, the pressure on the secondary side is 0.2 MPaG, the flow rate of the mixed gas to be supplied is 1000, and the hydrogen concentration is 5%, the control device 32 calculates the value of the dilution gas flow rate for setting the secondary-side hydrogen concentration to 20% as 33, and the opening degree of the dilution gas flow rate adjusting valve 21 is adjusted to have the value of the dilution gas flow rate of 33. Next, when the hydrogen concentration is changed to 10%, the opening degree of the dilution gas flow rate adjusting valve 21 is adjusted to have the dilution gas flow rate of 208. This configuration can adjust the dilution gas flow rate to obtain a target secondary-side hydrogen concentration without being affected by the change in the secondary-side hydrogen concentration and can adjust the secondary-side hydrogen concentration in a short time with respect to the change in the primary-side hydrogen concentration.

### [Fourth embodiment]

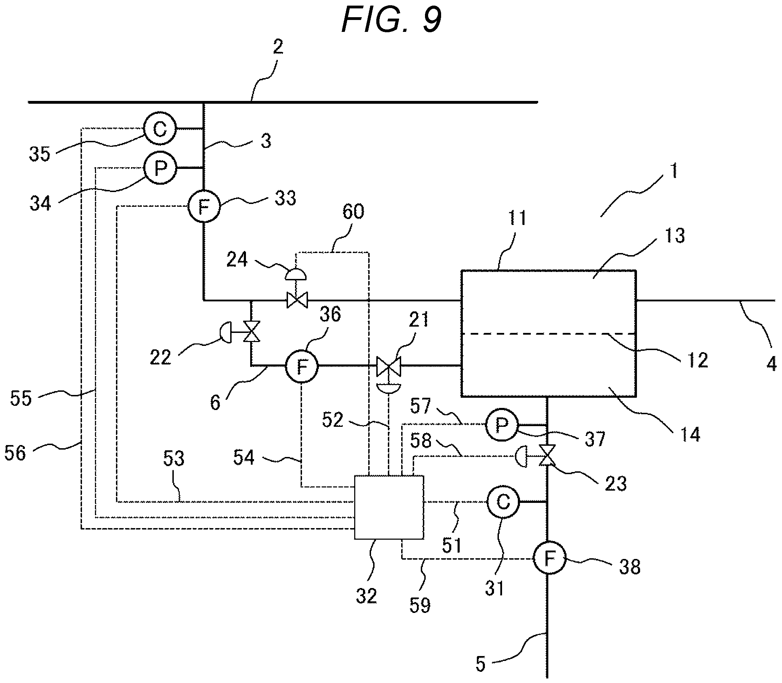

Fig. 9 is a schematic configuration diagram illustrating a gas separation apparatus of a fourth embodiment.

In this drawing, the difference from Fig. 8 of the third embodiment will be described.

In this drawing, a mixed gas flow rate adjusting valve control signal cable 60 is connected from the control device 32 to the mixed gas flow rate adjusting valve 24 provided to the mixed gas pipe 3. This configuration allows the control device 32 to adjust the opening degree of the mixed gas flow rate adjusting valve 24.

The permeation gas pipe 5 is provided with a secondary-side pressure gauge 37 (secondary-side pressure detection unit), a secondary-side flowmeter 38 (secondary-side flow rate detection unit), and a secondary-side pressure adjustment mechanism 23 at an outlet on the secondary side.

The secondary-side pressure gauge 37, the secondary-side flowmeter 38, and the secondary-side pressure adjustment mechanism 23 are connected to the control device 32 by a secondary-side pressure gauge signal cable 57, a secondary-side flowmeter signal cable 59, and a secondary-side pressure adjusting valve control signal cable 58, respectively. The control device 32 transmits a control signal to the secondary-side pressure adjustment mechanism 23 using the data of the secondary-side pressure gauge 37 and the secondary-side flowmeter 38 to adjust the pressure on the secondary side. The mixed gas flow rate adjusting valve and the secondary-side pressure adjustment mechanism are not necessarily used in combination, and the secondary-side pressure gauge, the secondary-side flowmeter, and the secondary-side pressure adjustment mechanism do not have to be provided.

Regarding the adjustment of the opening degree of the mixed gas flow rate adjusting valve 24, there are the following situations.

For example, when a large amount of hydrogen is produced by sunlight in the day time, and the hydrogen concentration on the primary side 13 increases, the secondary-side hydrogen concentration increases. It is conceivable that the flow rate of the dilution gas is increased to dilute hydrogen to obtain a target hydrogen concentration, and the amount of hydrogen sent to the secondary side 14 becomes larger than the demand. When the amount of hydrogen becomes larger than the demand, the amount of hydrogen can be adjusted by, for example, decreasing the amount of the mixed gas to be supplied to the hydrogen separation membrane module 11 to increase the amount of hydrogen to be sent to the secondary side 14.

For example, as in the calculation example of the first embodiment, when the pressure on the primary side is 1.7 MPaG, the pressure on the secondary side is 0.2 MPaG, the flow rate of the mixed gas to be supplied is 1000, and the hydrogen concentration is 5%, the amount of hydrogen to be supplied to the secondary side 14 at the secondary-side hydrogen concentration of 20% is 8.2. When the hydrogen concentration increases to 10%, the amount of hydrogen to be supplied to the secondary side 14 is 47 as estimated in the second embodiment. To make this supply amount the same as in the case where the hydrogen concentration is 5%, the mixed gas flow rate adjusting valve 24 is narrowed to set the mixed gas flow rate to 68. As a result, the hydrogen supply amount becomes 8.2 at the secondary-side hydrogen concentration of 20%, and the hydrogen supply amount becomes the same as in the case where the hydrogen concentration of the mixed gas is 5%.

In addition, regarding the adjustment of the pressure on the secondary side, there are the following situations.

For example, when a large amount of hydrogen is produced by sunlight in the day time, and the hydrogen concentration on the primary side 13 increases, the secondary-side hydrogen concentration increases. It is conceivable that the flow rate of the dilution gas is increased to dilute hydrogen to obtain a target hydrogen concentration, and the amount of hydrogen sent to the secondary side becomes larger than the demand. When the amount of hydrogen becomes larger than the demand, the pressure on the secondary side 14 is increased to reduce the hydrogen partial pressure difference between the primary side 13 and the secondary side 14, thereby reducing the hydrogen permeation amount. Further, since the secondary-side hydrogen concentration decreases, the required dilution gas flow rate is reduced. By adjusting the pressure on the secondary side, the amount of hydrogen to be sent to the secondary side 14 can be adjusted.

For example, as in the calculation example of the first embodiment, when the pressure on the primary side 13 is 1.7 MPaG, the pressure on the secondary side is 0.2 MPaG, the flow rate of the mixed gas to be supplied is 1000, and the hydrogen concentration is 5%, the amount of hydrogen to be supplied to the secondary side 14 at the secondary-side hydrogen concentration of 20% is 8.2. When the hydrogen concentration increases to 10%, the amount of hydrogen to be supplied to the secondary side 14 is 47 as estimated in the second embodiment. Adjusting the secondary-side pressure adjustment mechanism 23 to set the secondary-side pressure to 0.7 MPaG allows the hydrogen supply amount to be 8.2 at the secondary-side hydrogen concentration of 20%, which is the same hydrogen supply amount as that at the hydrogen concentration of 5% of the mixed gas.

### [Fifth embodiment]

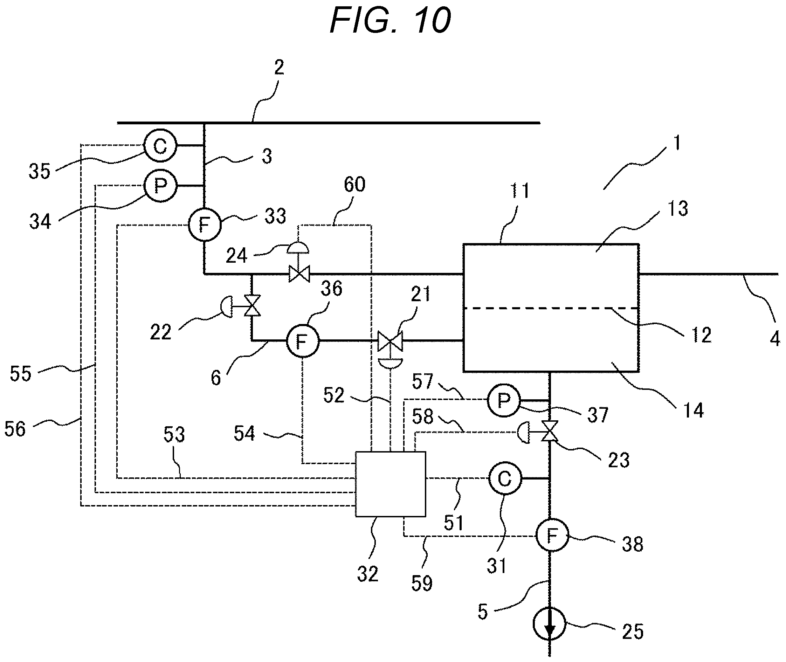

Fig. 10 is a schematic configuration diagram illustrating a gas separation apparatus of a fifth embodiment.

In this drawing, the difference from Fig. 9 is that a compressor 25 (decompression mechanism) is installed in the permeation gas pipe 5.

For example, in the estimation in the first embodiment, the pressure on the secondary side of the hydrogen separation membrane 12 is set to 0.2 MPaG, and the pressure on the secondary side 14 can be reduced by the compressor 25 to increase the hydrogen permeation amount, and the pressure on the downstream side of the compressor 25 can be increased to be a pressure required by the customer. For example, when the pressure on the secondary side is 0.0 MPaG (atmospheric pressure), the hydrogen permeation amount can be increased from 8.2 to 19.2.

The compressor 25 can also be applied to the first to third embodiments, and the hydrogen permeation amount can be increased. When the hydrogen permeation amount is the same, the amount of the hydrogen separation membrane 12 can be reduced, and the cost related to the hydrogen separation membrane 12 can be reduced.

Hereinafter, desirable embodiments of the gas separation apparatus according to the present disclosure will be collectively described.

The branch pipe or the non-permeation gas return pipe is provided with a gas flow rate adjusting valve.

The gas separation apparatus further includes a control unit, the permeation gas pipe is provided with a specific gas concentration detection unit, and the control unit adjusts the flow rate of the gas flowing through at least one of the mixed gas pipe, the branch pipe, and the non-permeation gas return pipe based on the concentration of the specific gas detected by the specific gas concentration detection unit.

The mixed gas pipe is provided with a primary-side detection unit including at least one of a primary-side flow rate detection unit, a primary-side pressure detection unit, and a primary-side specific gas concentration detection unit, and the control unit adjusts a flow rate of gas flowing through the branch pipe or the non-permeation gas return pipe using at least one of data of a primary-side flow rate, a primary-side pressure, and a primary-side specific gas concentration detected by the primary-side detection unit.

The permeation gas pipe is provided with a secondary-side pressure detection unit or a secondary-side flow rate detection unit, and the control unit adjusts a pressure on the secondary side using data of the secondary-side pressure detection unit or the secondary-side flow rate detection unit.

The permeation gas pipe is provided with a decompression mechanism.

The specific gas is hydrogen, and another component of the mixed gas is natural gas or city gas.

## Claims

1. A gas separation apparatus comprising:
a gas separation membrane module including a gas separation membrane that selectively allows a specific gas to permeate the membrane, the gas separation membrane module being separated into a primary side and a secondary side by the gas separation membrane,
the gas separation membrane module including
a mixed gas pipe that supplies a mixed gas containing a specific gas to the primary side,
a non-permeation gas pipe connected to the primary side, and
a permeation gas pipe connected to the secondary side; and
a branch pipe connecting the mixed gas pipe and the secondary side or a non-permeation gas return pipe connecting the non-permeation gas pipe and the secondary side.

2. The gas separation apparatus according to claim 1, wherein the branch pipe or the non-permeation gas return pipe is provided with a gas flow rate adjusting valve.

3. The gas separation apparatus according to claim 2, further comprising a control unit,
wherein
the permeation gas pipe is provided with a specific gas concentration detection unit, and
the control unit adjusts a flow rate of gas flowing through at least one of the mixed gas pipe, the branch pipe, and the non-permeation gas return pipe based on a concentration of the specific gas detected by the specific gas concentration detection unit.

4. The gas separation apparatus according to claim 1, further comprising a control unit,
wherein
the mixed gas pipe is provided with a primary-side detection unit including at least one of a primary-side flow rate detection unit, a primary-side pressure detection unit, and a primary-side specific gas concentration detection unit, and
the control unit adjusts a flow rate of gas flowing through the branch pipe or the non-permeation gas return pipe using at least one of data of a primary-side flow rate, a primary-side pressure, and a primary-side specific gas concentration detected by the primary-side detection unit.

5. The gas separation apparatus according to claim 1, further comprising a control unit,
wherein
the permeation gas pipe is provided with a secondary-side pressure detection unit or a secondary-side flow rate detection unit, and
the control unit adjusts a pressure on the secondary side using data of the secondary-side pressure detection unit or the secondary-side flow rate detection unit.

6. The gas separation apparatus according to claim 1, wherein the permeation gas pipe is provided with a decompression mechanism.

7. The gas separation apparatus according to claim 1, wherein
the specific gas is hydrogen, and
another component of the mixed gas is natural gas or city gas.
